# EUROPÄISCHE PATENTSCHRIFT

(11) **EP 2 430 327 B1**
(45) Veröffentlichungstag und Bekanntmachung des Hinweises auf die Patenterteilung: **06.03.2019**
(21) Anmeldenummer: 10713987.5
(22) Anmeldetag: 19.04.2010
(51) Int. Cl.: F16D 69/02, F16D 65/12, C23C 4/00, C23C 30/00, C23C 4/08, C23C 4/12, C23C 24/04

(54) **BESCHICHTETE LEICHTMETALLSCHEIBE**
COATED METALLIC DISK
DISQUE MÉTALLIQUE REVÊTU

(30) Priorität: 13.05.2009 DE 102009021213; 15.05.2009 DE 102009003161
(43) Veröffentlichungstag der Anmeldung: 21.03.2012
(73) Patentinhaber: Ford Global Technologies, LLC, Dearborn, MI 48126 (US)
(72) Erfinder: VERPOORT, Clemens, Maria, 40789 Monheim (DE); BRODA, Maik, 52249 Eschweiler (DE)
(74) Vertreter: Dörfler, Thomas
(86) Internationale Anmeldenummer: PCT/EP2010/055114
(87) Internationale Veröffentlichungsnummer: WO 2010/130529

(56) Entgegenhaltungen:
- WO-A2-2007/085328
- WO-A2-2008/076953
- DE-A1- 2 744 725
- DE-A1-102004 016 095
- DE-A1-102004 033 054
- DE-A1-102004 052 673
- DE-C1- 4 413 306
- DE-C1- 19 708 402
- GB-A- 1 385 479
- US-A1- 2005 123 686

## Beschreibung

Die Erfindung betrifft beschichtete reibbelastbare Leichtmetallscheiben, bestehend aus einer Tragescheibe mit einem Reibbelag oder einer Reibbeschichtung und werden als Bremsscheiben oder Kupplungsscheiben, insbesondere bei Fahrzeugen, eingeschlossen Schienenfahrzeugen, aber auch Seilbahnen u. dgl. eingesetzt.

Bremsscheiben dienen dazu, Bewegungsenergie in Reibungswärme umzuwandeln. Aufgrund der dabei schnell anfallenden großen Wärmemengen ist es notwendig, wärmeableitende Maßnahmen zu treffen und Materialien einzusetzen, die thermisch beständig sind.

Es ist Stand der Technik, in der Automobiltechnik reibbelastbare Scheiben mit Eisenlegierungs-Tragscheiben - bspw. aus Eisen-Grauguss - mit darauf aufgebrachten Verschleißschichten zu verwenden. Derartige Bremsscheiben auf Eisenlegierungsbasis haben unter anderem den Nachteil hohen Gewichts. In Anbetracht des ständig zunehmenden Bedürfnisses nach Gewichtseinsparung wird einerseits versucht, dieses schwere Tragscheiben-Material durch leichtere Materialien zu ersetzen - andererseits wächst der Bedarf an Hochleistungsbremsen, welche ausgezeichnete Bremseigenschaften, hohen Bremskomfort und gleichzeitig möglichst lange Lebensdauer haben. Leichtmetall hat den Nachteil, dass es andere Beschichtungen benötigt und hinsichtlich der thermischen Beständigkeit andere Eigenschaften aufweist.

Auch in anderen Bereichen sind leichtgewichtige, aber verschleißfeste Scheiben gefragt - so bei Schienenfahrzeugen, um dem Leichtbauerfordernis, Energieersparnis- und Standzeitanforderungen genügen zu können. Bei Kupplungsscheiben ist es erwünscht, leichte Scheiben wegen schnellerer möglicher Drehbeschleunigung und einer Gewichtsersparnis insgesamt zu haben.

Nachfolgend wird die Erfindung anhand von Automobil-Bremsscheiben erläutert, sie ist jedoch keinesfalls auf diese beschränkt. Der übliche Verschleiß von Bremsscheiben kommt durch die Belastung der Bremsflächen zu Stande. Daher ist es sehr wichtig, dass diese bremsflächenabriebresistent und gegenüber thermischen Belastungen stabil an die Tragscheibe haften. Ein weiterer Verschleiß bei Bremsscheiben kann ein sog. "Streichelverschleiß" sein, der durch Formfehler und Materialschlussfehler an der Trägerscheibe selbst entsteht, die ungleichen Abrieb begünstigen. Verzug der Scheibe beim Bremsen aufgrund von Maßungenauigkeiten und Materialproblemen führt ebenfalls zu ungleichmäßiger Abnutzung. Schließlich sind Korrosionsschäden an den Bremsscheiben, wie sie bei längerem Stand des Fahrzeugs auftreten, ebenfalls lebensdauerverkürzend für dieselben. Derartige Bremsscheiben sind bspw. aus den Druckschriften DE 10 2004 052 673 A1; der DE 103 42 743 A1 oder der EP 1 013 956 B2 bekannt.

Die Druckschrift WO 2007/085328 A2 offenbart Nano-Kompositmaterialien in einer Gleitlagerschicht. Die Beschichtung auf vorbestimmten Flächen von einem reibenden Kontakt ausgesetzten Maschinenteilen, insbesondere von Gleitlagern besteht aus einem Grundmaterial und mindestens einem in Abhängigkeit der gewünschten Verschleiß-, Gleit- und/oder Hafteigenschaften der Beschichtung ausgewählten Nanomaterial. Das Grundmaterial besteht mindestens aus einem Kunststoff, beispielsweise aus einem Harz. Das Harz liegt vorzugsweise in flüssiger Form vor, sodass die ausgewählten Nanomaterialien dem flüssigen Harz beigemischt werden können. Die Beschichtung weist eine verbesserte Gleiteigenschaft, eine verbesserte Dauerfestigkeit und/oder eine verbesserte Haftfestigkeit auf.

In der Druckschrift WO 2008/076 953 A2 werden amorphe nano-/mikrokristalline Strukturen aus Metall-Legierungen offenbart, die durch thermisches Spritzen als Schicht auf ein metallisches Substrat, z.B. Titanium oder Aluminium aufgetragen werden können.

Bekannt sind aus der Druckschrift US 2005/123686 A1 eine amorphe Metallabscheidung und neue auf Aluminium basierte amorphe Metalle. Beschrieben ist auch eine Vorrichtung zum Beschichten eines metallischen Substrats, z.B. Aluminium mit einem Nanokristalle beinhaltenden Metall-Pulvers, z.B. Aluminium. In einem elektischen Feld mit einer gepulsten Spannungsquelle in einer Edelgasatmosphäre wird mittels Spritzpistole das Mikron-MetallPulver zerstäubt.

Aus der Druckschrift DE 10 2004 016 096 A1 ist bekannt, als Bremsscheiben Cermet-Materialien auf AI-Tragscheiben einzusetzen. Auf eine Tragscheibe wird Keramikmaterial im Wesentlichen aus Aluminium- und Titanoxid aufgebracht. Durch die Kombination der Beschichtungsmaterialien soll eine erhöhte Wärmeleitfähigkeit (mehr als 30 W / °C m) erreicht werden.

Bekannt ist aus der Druckschrift DE 197 08 402 C1 eine verschleißfeste Schicht für Leichtmetallbauteile einer Verbrennungskraftmaschine, insbesondere für die Zylinderlaufbuchsen des Zylinderblocks. Die verschleißfeste Schicht aus Hartstoffteilchen ist durch nanokristalline Partikel mit einer mittleren Teilchengröße von weniger als 100 Nanometer gebildet. Die nanokristallinen Partikel der Schicht sind in eine Metallmatrix eingebettet. Die verschleißfeste Schicht wird durch thermisches Spritzen der nanokristallinen Partikel aufgetragen.

Die Druckschrift DE 27 44 725 A1 offenbart eine verschleißfeste Beschichtung der Arbeitsoberfläche von scheibenförmigen Maschinenteilen aus Aluminium oder Aluminiumlegierungen. Die verschleißfeste Schicht ist eine Cermetbeschichtung mit aluminiumhaltiger Metallkomponente mit einer Dicke von ca. 500 µm, die mittels thermischem Spritzverfahren aufgetragenen wird. Zwischen dem Grundmaterial und der Cermetbeschichtung ist eine Haftschicht aus Aluminium mit einer Dicke von 10 bis 100 µm vorhanden.

Die Druckschrift DE 10 2004 016 095 A1 betrifft eine Bremsscheibe für ein Fahrzeug. Auf den Grundkörper aus Grauguss wird eine verschleißfeste Schicht als Reibschicht aufgetragen. Zwischen dem Grundkörper und der verschleißfesten Schicht ist eine Zwischenschicht für eine erhöhte Diffusionsdichtigkeit gegen Feuchtigkeit und/oder Halogenitionen eingefügt.

Das Problem bei der Verwendung von Al-Scheiben liegt dabei in der niedrigen Temperaturbeständigkeit und der niedrigen Härte des Al-Materials begründet. Die von der Bremsscheibe aufgenommen Bremsenergie steigt an mit dem Fahrzeuggewicht und mit dem Quadrat der Fahrzeuggeschwindigkeit. Die Bremsenergie erzeugt einen hohen Reibwärmefluss von der Scheibe in die Radnabe und in die empfindliche Radlagerung. So sind aufwändige Konstruktionen bekannt, bei denen Zwischenflansche aus Vollkeramik als Wärmedämmschicht verwendet werden, um die erzeugte Wärme am äußeren Reibring nicht an den Nabenflansch der Tragscheibe gelangen zu lassen.

Auch ist z.B. aus US 5 612 110 A die Verwendung von teueren plasmagespritzten ZirkonOxid-Wärmedämmschichten mit Stabilisierung durch seltene Erdmetalle wie Yttrium bekannt. Der Erfindung liegt die Aufgabe zugrunde, eine beschichtete Leichtmetallscheibe und ein Verfahren zum Herstellen einer für eine Massenfertigung geeigneten mechanisch widerstandsfähigen beschichteten Leichtmetallscheibe so auszuführen, dass die Beschichtung bremsflächenabriebresistent und gegenüber thermischen Belastungen stabil an der Tragscheibe haftet.

Diese Aufgabe wird durch die Merkmale der unabhängigen Ansprüche 1 und 7 gelöst. Weiterbildungen sind in den abhängigen Ansprüchen enthalten.

Die Erfinder haben erkannt, dass weder die Wärmeableitung durch die Radnabe mittels hoch wärmeleitender Schichten noch die Verwendung von separaten Dämmschichten, welche zusätzliche Haftprobleme aufwerfen können, zu für die Massenfertigung geeigneten reibbelastbaren Scheiben mit den erforderlichen Standzeiten führt.

Erfindungsgemäß wird die Reibschicht selbst als wärmedämmende metallische Schicht ausgebildet. Erfahrungsgemäß sind Metalle jedenfalls im Vergleich zu Cermet-Materialien gute Wärmeleiter. Insbesondere zählen Aluminiumverbindungen mit mehr als 200 W/oC m zu den besten Wärmeleitern. Selbst Grauguss und Eisen-Aluminiumlegierungen weisen noch eine Wärmeleitfähigkeit von mehreren 10 W / °C m auf. Die erfindungsgemäße reibbelastbare

Scheibe, insbesondere Bremsscheibe besteht aus einer Leichtmetalltragscheibe aus thermisch beständiger Leichtmetall-Legierung, insbesondere aus untereutektischen Al-Si Legierung und einer wärmedämmenden Reibschicht aus Nanokristalle aufweisender Metall-Legierung.

Dabei führt die Bildung der Nanokristalle (deren Korngröße kleiner als 100 nm ist) zu der gewünschten, deutlich verringerten Wärmeleitfähigkeit von erheblich unter 10 W / °C m. Zusätzlich weist die wärmedämmende metallische Reibschicht einen hohen Reibwert auf, der mindestens dem bei Bremsscheiben üblichen Wert von 0,45 entspricht.

Überraschenderweise ist festgestellt worden, dass besonders zuverlässig auf der relativ dünnen Tragscheibe von Bremsen oder Kupplungen nanokristalline Metallschichten mit einer erheblich geringeren Wärmeleitfähigkeit als Metallschichten der gleichen Zusammensetzung mit gröberem Korn erzeugt werden können. Dies wird von den Erfinder dadurch erklärt, dass sich die physikalischen Eigenschaften von Materialien drastisch ändern, sobald sie nicht mehr homogen sind. Nach dem Verständnis der Erfinder beherrscht normalerweise das Korninnere das Verhalten des Materials. Dann, wenn die Kristallitgröße aus dem mm-Bereich in den Nanometerbereich wechselt (Nanokristalle mit Korngrößen unter 100 nm), liegt ein anderes Verhältnis von Korngrenzenoberfläche und Korninnerem vor. Beim Übergang zum Nanobereich nimmt der Anteil an gestörtem Korngrenzmaterial im Verhältnis stark zu, wobei die "gestörten Bereichen" im Kristallgitter des Korngrenzenmaterials in zunehmendem Maß die Eigenschaften der Reibschicht bestimmen. Diese gestörten Bereiche sind als weitgehend amorph anzusehen.

Derartige gestörte Bereiche haben Durchmesser in der Größenordnung von 1-3 nm. Ein weiterer Vorteil des Aufbringens der erfindungsgemäßen Metallisolationsschichten auf den Leichtmetalltragkörper ist die erreichte Metall/Metall-Haftung. Da Metallschichten aneinanderstoßen, können ggf. an den Grenzen beider Materialien die Haftung fördernde Diffusionsvorgänge stattfinden und aufgrund ähnlicher Ausdehnungskoeffizienten ist die Verbindung weniger stark bei thermischer Beanspruchung belastet. Dadurch treten weniger Verbindungsprobleme zwischen Trägerscheibe und Reibschicht auf und aufwendiges Befestigen kann vermieden werden, da die Verbindung zwischen beiden Metallen auch bei der durch die wärmedämmende metallische Reibschicht erhöhten Bremstemperatur aufgrund geringerer Ausdehnungsdifferenz weniger belastet wird. Anstelle der in den bekannten Bremsscheiben eingesetzten thermisch isolierenden.

Keramikschichten können erfindungsgemäß nun auch preiswertere und mit dem metallischen Träger kompatible metallische Materialien, die aufgrund der Nano-Struktur thermisch isolierend sind, eingesetzt werden, ohne ihre sonstigen vorteilhaften Eigenschaften, wie gute Haftung an anderen Metallschichten, Duktilität und ähnliches zu verlieren. Zusätzlich führt die Nanostruktur in Verbindung mit den in der Schicht erzeugten Karbiden zu einem für hohe Bremswirkung vorteilhaften Reibwert von mehr als 0,48.

Zur Verbesserung der Haftung können zusätzlich haftvermittelnde Schichten aufgebracht oder aber Flussmittel beim thermischen Spritzen eingesetzt werden, um etwaige Oxide auf der Leichtmetallschicht, welche das Anhaften einer neuen Metallschicht hindern, zu entfernen/zu reduzieren.

Es ist vorteilhaft, die nanokristalline Metallschicht durch thermisches Spritzen herzustellen. Derartige thermische Spritzverfahren sind Detonationsspritzen, Flammspritzen, Hochgeschwindigkeits-Flammspritzen, Kaltgasspritzen, Laserspritzen, Lichtbogenspritzen, Plasmaspritzen. Für die Herstellung von Nano-Strukturen sind alle Verfahren günstig, die zu einer sehr starken Zerstäubung der Schmelzetröpfchen führen - wie hohe Gasgeschwindigkeiten am Düsenaustritt und ggf. auch hohe Temperaturen der Schmelze, die dann leichter zerstäubt.

Günstig für das thermische Spritzverfahren ist insbesondere für in Drahtform vorlegbare Spritzmaterialien das Plasma-Spritzen, und dort insbesondere das plasma transferred wire arc (PTWA) Spritzen. Dieses wird bspw. für die Beschichtung von Motorblöcken mit metallischen Gleitschichten benutzt. Dabei kommt es besonders auf die tribologisch optimierten Eigenschaften der maximal 300 Mikrometer dicken Gleitschicht an. Es kann aber auch Hochgeschwindigkeitsflammspritzen eingesetzt werden, welches den Vorteil hoher Gasbeschleunigung im Spritznebel hat.

Beim Auftreffen sehr kleiner, geschmolzener Metalltröpfchen, welche mit PTWA erzeugt werden können, sind Nanostrukturen darstellbar, die zu den erwünschten Eigenschaften der wärmedämmenden Schicht mit hohem Reibbeiwert führen. Das Verfahren ist unproblematisch an die jeweiligen Gegebenheiten anzupassen und kann bspw. durch die Wahl des Transportgases in der so gebildeten wärmedämmenden Schicht Oxidation verhindern oder aber durch Zufügen von entsprechenden Gasen, wie Stickstoff oder kohlenstoffhaitiger Gase das Entstehen von harten Nitriden und Carbiden fördern. Aus Gewichtsersparnisgründen und auch aufgrund der mechanischen Eigenschaften einer leichtgewichtigen Bremsscheibe wird ein Tragscheibe aus Leichtmetall-Legierung ausgewählt aus der Gruppe bestehend aus Aluminium-Legierungen, Magnesium-Legierungen, Titan-Legierungen, alle vorstehenden auch als Hartstoff- und/oder faserverstärkte Legierungen, eingesetzt. Besonders faserverstärkte Legierungen haben den Vorteil geringeren Verzugs bei thermischer Belastung und damit höherer Standfestigkeit.

Nachfolgend wird unter Legierung sowohl das Metall selbst, seine Legierungen als auch deren mit Hartstoffen oder Fasern verstärkte Formen verstanden. Dabei eignen sich in vorteilhafter Weise für die wärmedämmende Schichten solche ausgewählt aus der Gruppe bestehend aus nanokristallinen Eisenlegierungen, nanokristallinen Aluminiumlegierungen.

Von den Eisenlegierungen sind in einigen Fällen besonders nanokristalline Stahllegierungen aufgrund ihrer mechanischen Widerstandsfähigkeit sowie ihrer ohnehin schlechteren Wärmeleitfähigkeit geeignet.

Die Leichtmetalltragscheiben können aus Leichtmetall-Strangpressprofilen in preisgünstiger Weise hergestellt werden. Verfahren zum Strangpressen von Leichtmetall sind bekannt und umfassen sowohl das Strangpressen von Leichtmetallpulver als auch das Strangpressen von Vollmaterial, wobei Aluminium-Materialien mit hoher Warmfestigkeit, die anhand der bekannten Tabellen, wie den einschlägigen Nachschlagewerken für Legierungen (z.B. Aluminiumschlüssel, Dr. John Datta, Aluminium-Verlag Marketing & Kommunikation, Düsseldorf), ermittelbar sind, bevorzugt sind.

Das Verfahren zur Herstellung einer beschichteten Tragscheibe weist folgende Schritte auf: Vorlegen eines Leichtmetallgrundkörpers die Tragscheibe - und thermisches Aufspritzen einer mechanisch widerstandsfähigen Metall-Legierung unter die Bildung von Nanopartikeln in der Spritzschicht fördernden Bedingungen auf. Besonders für leicht in Drahtform erhältliches Spritzmaterial bietet sich PTWA als Auftragungsverfahren an. Dadurch kann, wenn das Material im PTWA-Brenner verarbeitet wird, in der Plasmaflamme für sehr kurze Zeit ein Schmelztropfen entstehen, der dann durch das Sekundärgas, das die Zerstäubung des Tröpfchen und Beschleunigung auf mehrfache Schallgeschwindigkeit bewirkt, als sehr kleine Tröpfchen auf die Oberfläche des Zielmaterials - hier also der Tragscheibe selbst oder aber auf eine darauf befindliche Schicht, wie eine Haftvermittlerschicht, in Form von Splats - bspw. Mit einem Durchmesser in der Größenordnung von 30 - 60 Mikrometer und einer Dicke von nur 10 - 30 Mikrometer, abgeschieden. Diesen kleinen Splats mit sehr geringer Wärmekapazität wird nun beim Auftreffen auf den Untergrund sogleich Wärme entzogen mit Geschwindigkeiten in der Größenordnung von 1 x 106°C/sec. Dadurch erstarrt die Schmelze glasartig, da die Abkühlgeschwindigkeit für Kristallbildung zu hoch ist, und die Splats bleiben amorph. Bei Aufprall der nächsten Splats mit hoher Temperatur findet dann durch den Temperaturanstieg in der Splat-Schicht das Ausscheiden von Nano-Kristalliten statt. Dies konnte durch Transmissionselektronenmikroskopie (TEM) Untersuchung der so gebildeten Schichten bestätigt werden, wobei sich für die ausgeschiedenen Kristallite bei Verwendung von PTWA und Chromstahl-Legierung als Spritzdraht Kristallgrößen bzw. Korngrößen von etwa unter 100 Nanometer, bspw. 60 Nanometer ergaben.

Dabei kann durch relativ große Splats (50-60 Mikrometer) der Reibbeiwert erhöht werden. Falls die Anhaftung der gespritzten wärmedämmende Schicht verbessert werden soll, kann ggf. die Oberfläche des Leichtmetallgrundkörpers vor dem thermischen Spritzen durch chemische und/oder mechanische Bearbeitung vorbereitet werden. Als mechanisches Verfahren bietet sich das Aufrauen durch Rillen, Sand- oder Kugelstrahlen, Anschleifen, Prägen an. Es können aber auch Laserbehandlungen eingesetzt werden. Leichtmetallgrundkörper können aber auch chemisch vorbereitet werden, durch Anätzen, Entfetten und andere Verfahren, wie sie dem Fachmann geläufig sind.

Ggf. kann es günstig sein, wenn die chemische Adhäsion zwischen wärmedämmende Schicht und Tragscheibe unzureichend erscheint, dass vor der wärmedämmenden Schicht ein Haftvermittler auf die Oberfläche des Leichtmetallgrundkörpers aufgebracht wird. Eine typische Haftvermittlerschicht für eine Aluminiumbasis und Stahl-Reibschicht ist ein Nickel/Aluminium-Haftgrund.

Das Anhaften aber auch mechanisch durch Formschluss zwischen den Schichten verbessert werden, z. B. durch Nuten mit Hinterschnitten, insbesondere durch eine Schwalbenschwanzgeometrie.

Wenn hier die Rede von Tragscheiben ist, so soll dies nur exemplarisch die Anwendung für Reibscheiben wie Bremsscheiben oder Kupplungsscheiben verdeutlichen. Dieses Verfahren zur Beschichtung kann bei allen reibbelasteten mechanischen Komponenten Verwendung finden, die einen Leichtmetallgrundkörper und eine Reibschicht aufweisen, also auch Bremstrommeln, Reibtrommeln, Konuskupplungen, Synchronringe etc.

Nachfolgend wird die Erfindung anhand von Ausführungsbeispielen sowie der Zeichnung, auf welche sie keineswegs eingeschränkt ist, näher erläutert. Darin zeigen:
- Fig. 1:: schematisch eine beschichtete Tragscheibe im Querschnitt;
- Fig. 2:: schematisch ein Detail einer beschichteten Tragscheibe, bei der eine Schwalbenschwanz-Verzahnung zwischen den Schichten ausgebildet ist;
- Fig. 3:: schematisch eine PTWA - Anlage beim Aufspritzen der wärmedämmende Schicht auf eine Tragscheibe; und
- Fig. 4:: schematisch in zeitlicher Abfolge den Ablauf der Strukturumwandlung von durch das PTWA gebildeten Glas-Splats mit nachfolgender Kristallitbildung in denselben.

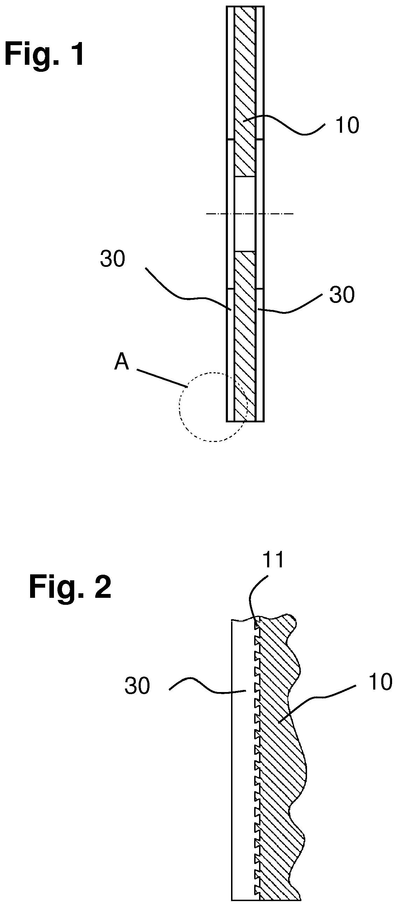

In Fig. 1 ist schematisch eine Bremsscheibe für Landfahrzeuge dargestellt. Diese weist eine Tragscheibe 10 mit einer Befestigungsöffnung 20 und eine darauf aufgebrachte Reibschicht 30 auf. Die Größenverhältnisse sind dabei nicht maßstäblich.

In Fig. 2 ist der vergrößterte Ausschnitt A aus Figur 1 dargestellt. Auf der Tragscheibe 10 sind schwalbenschwanzförmige Nuten 11 eingebracht, wodurch die die aufgespritzte Reibschicht 30 mechanisch mit der Tragscheibe 10 verklammert ist und damit eine sehr gute Haftung der Reibschicht 30 auf der Tragscheibe 10 erzielt wird.

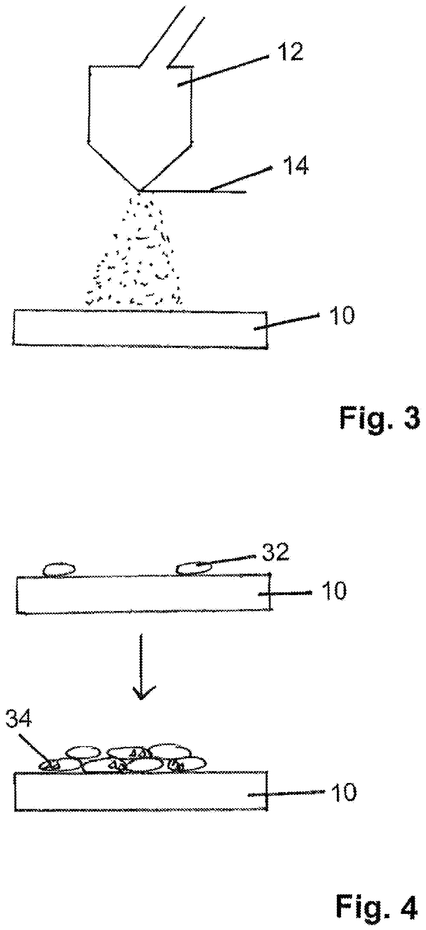

In Fig. 3 ist schematisch ein Auftragungsanlage für das PTWA-Spritzverfahren gezeigt. Ein PTWA-Spritzkopf 12 schmilzt mittels Plasma einen Metalldraht 14, verdüst über das Transportgas, ggf. unter Einsatz von Sekundärgas, im Plasma geschmolzenes Metalldrahtmaterial 14 und transportiert es mit hoher Geschwindigkeit auf die Trägscheibe 10. Dort bildet sich, wie in Fig. 4 gezeigt, zunächst ein amorphes glasartiges Splat 32, in welchem danach beim Erwärmen durch die nächsten auftreffenden Splats - wie aus der darunter liegenden Darstellung ersichtlich, teilweise Kristallite 34 in den Splats geringer Abmessungen gebildet werden. Eine einheitliche Kristallstruktur wird aufgrund der schnellenAbkühlung des Gefüges nicht gebildet, sondern es verbleiben amorphe und ungeordnete Bereiche 36. Beim Auftreffen neuer Splats auf die bereits abgeschiedenen Splats finden ferner sinterartige Diffusionsvorgänge an den Splatgrenzen unter Herstellung der Reibschicht 30 statt. Eine derartig hergestellte Spritzschicht mit mehrfachen Lagen relativ geringer Dicke (10-20 Mikrometer) weist eine sehr große Härte, eine gute Abriebsfestigkeit, gute Korrosionsbeständigkeit, ein relative gutes thermisches Isolationsvermögen und eine guten Reibbeiwert auf. Die so hergestellte Spritzschicht eignet sich somit besonders für die Verwendung der Reibschicht 30 bei Bremsscheiben und anderen reibbelasteten mechanischen Bauteilen mit einer Gesamtdicke von z.B. 500 Mikrometer. Die Beschichtung erfolgt bevorzugt ausgehend von der Drehachse in radialer Richtung bei rotierender Tragscheibe. Deren Drehgeschwindigkeit beträgt typischerweise mehrere 100 Umdrehungen pro Minute. Die Beschichtungsgeschwindigkeit in radialer Richtung nimmt bevorzugt mit dem Abstand von der Drehachse (etwa entsprechend der Umfangsgeschwindigkeit) zu, um die Lagendicke auch in radialer Richtung möglichst konstant zu halten. Entsprechend würde die Beschichtungsgeschwindigkeit in radialer Richtung abnehmen, wenn der PTWASpritzkopf vom größeren zum kleineren Radius geführt wird. Bevorzugt ist die Drehachse etwa horizontal ausgerichtet, wobei jede Seiten der Bremsscheibe mit einem PTWA-Spritzkopf beschichtet wird. Die Spritzköpfe sind dabei bevorzugt in Umfangsrichtung um ca. 1800 versetzt, liegen also relativ zur Drehasche diametral.

Die hergestellten Bremsscheiben mit den Spritzschichten werden in üblicher Weise geschliffen.

Nachfolgend werden Ausführungsbeispiele für Bremsscheiben für Landfahrzeuge aufgeführt:

### Beispiel 1

Bremsscheibe für Kraftfahrzeuge mit mechanisch befestigter Verschleißschicht: Ein pulvermetallurgisch hergestellte Tragscheibe 10 aus der thermisch standfesten Aluminiumlegierung AlSi20Fe5Ni2, verstärkt mit 10 Gew.%SiC, wird mit einem Schwalbenschwanzprofil 11 versehen.

Auf dieser mit Schwalbenschwanz-Geometrie 11 versehenen Tragscheibe 10 wird mittels PTWA mit einem Stahl-Spritzdraht eine FeCrBSiC Spritzschicht aufgebracht. Der Stahl-Spritzdraht weist folgende Zusammensetzung in Gewichtsprozenten auf:
Eisen (Fe); Chrom (Cr) 20 - 40 %, bevorzugt 25 - 35 0/0; Bor (B) 3,5 - 4,4 0/0, bevorzugt 3,7 - 4 %; sowie geringe Mengen C und Si. Die Beschichtung erfolgt in mehreren Lagen von jeweils 10 - 30 Mikrometer Dicke, bis zu einer Gesamtdicke von ca. 600 Mikrometer. bevorzugt von jeweils 10 - 20 Mikrometer Dicke, bis zu einer Gesamtdicke von ca. 500 Mikrometer.

Die derart hergestellte Bremsscheibe zeigte bei einer Gewichtsersparnis gegenüber herkömmlichen Kraftfahrzeug-Bremsscheiben von etwa 30 % ein ähnliche Standfestigkeit und Korrosionsfestigkeit.

### Beispiel 2

Bremsscheibe für Kraftfahrzeuge mit metallurgisch/chemisch befestigter Verschleißschicht: Eine im Kokillenguss gefertigte Tragscheibe 10 aus der Aluminiumlegierung AlSi20Fe5Ni2 wird gesandstrahlt. Kurz nach dem Sandstrahlen wird, um die Oxidation der freigelegten Oberfläche zu verhindern, eine Ni-Al-Legierung, bevorzugt 95/5, oder eine Ni-Cr-Legierung, bevorzugt 80/20, als Haftvermittler 24 auf die Tragscheibe 10 aufgebracht.

Auf die Haftvermittlerschicht wird mittels PTWA mit einem Stahl-Spritzdraht mit einem Kern aus Kaliumaluminiumfluorid als Flussmittel eine FeCrBSiC Spritzschicht aufgebracht. Der Stahl-Spritzdraht weist folgende Zusammensetzung in Gewichtsprozenten auf: Eisen (Fe); Chrom (Cr) 20 - 40 0/0, bevorzugt 25 - 35 %; Bor (B) 3,5 - 4,4 0/0, bevorzugt 3,7 - 4 %; sowie geringe Mengen C und Si. Die Beschichtung erfolgt in mehreren Lagen von jeweils 10 - 30 Mikrometer Dicke, bis zu einer Gesamtdicke von ca. 600 Mikrometer. bevorzugt von jeweils 10- 20 Mikrometer Dicke, bis zu einer Gesamtdicke von ca. 500 Mikrometer. Die derart hergestellte Bremsscheibe weist gegenüber herkömmlichen Bremsscheiben mit einem Eisengusstragkörper eine Gewichtsersparnis von 30 % auf bei gleichem oder besserem Verhalten hinsichtlich Standfestigkeit und Korrosionsfestigkeit.

Der Spritzdraht mit Flussmittelkern hat den Vorteil, dass Oberflächenverunreinigungen, wie Oxide, auf dem Untergrund durch das Flussmittel angeätzt oder zerstört werden, was das Anhaften der Spritzschicht verbessert. Der flussmittelgefüllte Spritzdraht ist bspw. herstellbar durch Aufbringen von Flussmittelpulver auf Metallblech, Rollen des Blechs zu einem Rohr und anschließendes Ziehen der Rolle auf einen gewünschten Drahtdurchmesser. In der so aufgebrachten Chromstahlschicht konnten Nano-Strukturen in den damit über PTWA hergestellten Schichten mittels Transmissionselektronenmikroskopie nachgewiesen werden. Diese TEM-Aufnahmen zeigten einen mittleren Teilchendurchmesser der Splats von 60 Jlm und teilkristalline Strukturen mit Kristallgrößen bzw. Korngrößen von um 50 nm.

### Beispiel 3

Bremsscheibe für Kraftfahrzeuge mit metallurgisch/chemisch befestigter Verschleißschicht:
Ein Tragscheibe aus der stranggepressten thermisch standfesten Aluminiumlegierung AlSi20Fe5Ni2 wird durch ein geeignetes Aufrauverfahren mechanisch aufgeraut. Danach wird eine Ni-Al-Legierung, bevorzugt 95/5, oder eine Ni-Cr-Legierung, bevorzugt 80/20, als Haftvermittler 24 auf die Tragscheibe 10 aufgebracht.
Auf die Haftvermittlerschicht wird durch Flammspritzen eine pulverförmige Stahllegierung als Beschichtungswerkstoff mit einer Brenngas-Sauerstoffflamme erhitzt und unter Zuführung zusätzlicher Druckluft mit hoher Geschwindigkeit auf die Aluminiumträgerscheibe gespritzt. Das Verfahren arbeitet mit einer Flamme aus Brenngas-Sauerstoffgemisch, welche die geschmolzenen Werkstoffe mitreißt und erhitzt. Als Spritzschicht wird ein Pulver der folgenden Zusammensetzung aufgebracht, wobei die Angaben in Gewichtsprozenten sind: Eisen (Fe); Chrom (Cr) 22 - 28 0/0; Bor (B) 1,5 - 4,5 0/0; Molybdän (Mo) 3 - 4,5 0/0; Wolfram (W) 1 - 6,8 0/0; Niob (Nb) 3 - 4 0/0; Silizium (Si) 0,2 - 1,2 0/0; Kohlenstoff (C) 0,1 - 1 0/0; Mangan (Mn) 0,5 - 0,9 0/0; Nickel (Ni) 0,2 - 0,5 0/0. Die Beschichtung erfolgt in mehreren Lagen von jeweils 10- 30 Mikrometer Dicke, bis zu einer Gesamtdicke von ca. 600 Mikrometer, bevorzugt von jeweils 10 - 20 Mikrometer Dicke, bis zu einer Gesamtdicke von ca. 500 Mikrometer. Zusätzlich führt die Nanostruktur in Verbindung mit den in der Schicht erzeugten Karbiden zu einem für hohe Bremswirkung vorteilhaften Reibwert von mehr als 0,48.

Die derart hergestellte Bremsscheibe zeigte bei einer Gewichtsersparnis gegenüber herkömmlichen Kraftfahrzeug-Bremsscheiben von 30 % und mehr ein vergleichbares Verhalten hinsichtlich Standfestigkeit und Korrosionsfestigkeit.

Obwohl bevorzugte Ausführungsformen der Erfindung detailliert beschrieben wurden, sind Fachleuten, die mit dem Stand der Technik vertraut sind, auf den sich diese Erfindung bezieht, verschiedene alternative Konstruktionen und Ausführungsformen der Erfindung, wie sie durch die Ansprüche definiert sind, offensichtlich.

### Bezugszeichenliste

- 10: Tragscheibe
- 11: Schwalbenschanznuten
- 12: PTWA-Spritzdüse
- 14: Metalldraht
- 30: Reibschicht
- 32: glasartiges Splat
- 34: Kristallite

## Patentansprüche

1. Beschichtete Leichtmetallscheibe mit einer Tragscheibe aus einer thermisch beständigen Leichtmetall-Legierung und einer durch thermisches Spritzen aus einer Nanokristalle aufweisenden Metall-Legierung gebildeten wärmedämmenden Reibschicht,
**dadurch gekennzeichnet, dass**
die durch thermisches Spritzen mit sehr starker Zerstäubung der Schmelztröpfchen aufgetragene Reibschicht (30) mehrere dünne Lagen in einer Dicke von je 10 bis 30 Mikrometer mit einer Gesamtdicke von bis zu 600 Mikrometer und
eine Haftvermittlung zwischen Tragscheibe (10) und Reibschicht (30) aufweist.

2. Scheibe nach Anspruch 1, **dadurch gekennzeichnet, dass** die Leichtmetall-Legierung ausgewählt ist aus der Gruppe bestehend aus Aluminium-Legierungen, Magnesium-Legierungen, Titan-Legierungen.

3. Scheibe nach Anspruch 1 oder 2, **dadurch gekennzeichnet, dass** die Metall-Legierung der wärmedämmenden Reibschicht (30) ausgewählt ist aus der Gruppe bestehend aus Eisenlegierungen, Aluminiumlegierungen.

4. Scheibe nach einem der vorangehenden Ansprüche, **dadurch gekennzeichnet, dass** die wärmedämmende Reibschicht (30) eine Stahllegierung ist.

5. Scheibe nach einem der vorangehenden Ansprüche, **dadurch gekennzeichnet, dass** die Tragscheibe (10) hergestellt ist aus Aluminiumlegierungs-Strangpressprofil.

6. Scheibe nach einem der vorangehenden Ansprüche, **dadurch gekennzeichnet, dass** die Haftvermittlung zwischen der wärmedämmenden Reibschicht (30) und der Tragscheibe (10) ausgewählt ist aus der Gruppe von Formschluss zwischen Reibschicht (30) und Tragscheibe (10), mindestens eine Haftvermittlerschicht aus einem Nickel/Aluminium-Haftgrund, mechanisches oder chemisches Aufrauhen der Tragscheibe (10).

7. Verfahren zum Herstellen einer mechanisch widerstandsfähigen beschichteten Leichtmetallscheibe umfassend:
- Bereitstellen eines thermisch beständigen Leichtmetallgrundkörpers und
- thermisches Spritzen einer mechanisch widerstandsfähigen Metall-Legierung unter Bildung von Nanopartikeln in der Spritzschicht,
**gekennzeichnet durch**
- Herstellen einer Haftvermittlung zwischen der aufzutragenden Beschichtung und dem Leichtmetallgrundkörper
- Bildung sehr kleiner Tröpfchen auf der Oberfläche des Leichtmetallgrundkörpers durch Zerstäubung und Beschleunigung der Schmelztröpfchen auf mehrfache Schallgeschwindigkeit am Düsenaustritt und/oder
einer hohen Temperatur der Schmelze und
- Auftrag in mehreren dünnen Lagen
-- in einer Dicke von je 10 bis 30 Mikrometer und
-- mit einer Gesamtdicke von bis zu 600 Mikrometer.

8. Verfahren nach Anspruch 7, **dadurch gekennzeichnet, dass** zur Haftvermittlung die Oberfläche des Leichtmetallgrundkörpers vor dem thermischen Spritzen durch chemische und/oder mechanische Bearbeitung vorbereitet wird.

9. Verfahren nach Anspruch 7 oder 8, **dadurch gekennzeichnet, dass** zur Haftvermittlung vor der wärmedämmenden Reibschicht ein Haftvermittler auf die Oberfläche des Leichtmetallgrundkörpers aufgebracht wird.

10. Verfahren nach einem der Ansprüche 7 bis 9, **dadurch gekennzeichnet, dass** das thermische Spritzverfahren ausgewählt ist aus der Gruppe bestehend aus Detonationsspritzen, Flammspritzen, Hochgeschwindigkeits-Flammspritzen, Kaltgasspritzen, Laserspritzen, Lichtbogenspritzen, Plasmaspritzen.

11. Verfahren nach Anspruch 10, **dadurch gekennzeichnet, dass** das thermische Spritzverfahren Draht-Plasmaspritzen (PTWA) ist.

12. Verfahren nach Anspruch 10, **dadurch gekennzeichnet, dass** das thermische Spritzverfahren Flammspritzen ist.

## Claims

1. Coated lightweight metal disk with a support disk of a thermally resistant lightweight metal alloy and a heat-insulating friction layer which is formed by thermal spraying from a metal alloy comprising nano crystals, **characterized in that**
the friction layer (30) applied by thermal spraying with very strong atomization of the melt droplets comprises multiple thin layers each of a thickness of 10 to 30 micrometres, with a total thickness of up to 600 micrometres, and
has adhesion promotion between the support disk (10) and the friction layer (30).

2. Disk according to Claim 1, **characterized in that** the lightweight metal alloy is selected from the group comprising aluminum alloys, magnesium alloys and titanium alloys.

3. Disk according to Claim 1 or 2, **characterized in that** the metal alloy of the heat-insulating friction layer (30) is selected from the group comprising iron alloys and aluminum alloys.

4. Disk according to one of the preceding claims, **characterized in that** the heat-insulating friction layer (30) is a steel alloy.

5. Disk according to one of the preceding claims, **characterized in that** the support disk (10) is produced from an aluminum-alloy extruded profile.

6. Disk according to one of the preceding claims, **characterized in that** the adhesion promotion between the heat-insulating friction layer (30) and the support disk (10) is selected from the group: interlocking between the friction layer (30) and the support disk (10), at least one adhesion-promoter layer comprising a nickel/aluminum adherend surface and mechanical or chemical roughening of the support disk (10).

7. Method for producing a mechanically resistant coated lightweight metal disk comprising:
- providing a thermally resistant lightweight metal base body and
- thermally spraying a mechanically resistant metal alloy with formation of nano particles in the sprayed layer,
**characterized by**
- producing an adhesion promotion between the coating to be applied and the lightweight metal base body
- forming very small droplets on the surface of the lightweight metal base body by atomizing and accelerating the melt droplets to several times the speed of sound at the nozzle outlet and/or a high temperature of the melt and
- application in multiple thin layers
- each of a thickness of 10 to 30 micrometres and
- with a total thickness of up to 600 micrometres.

8. Method according to Claim 7, **characterized in that** for adhesion promotion the surface of the lightweight metal base body is prepared before the thermal spraying by chemical and/or mechanical working.

9. Method according to Claim 7 or 8, **characterized in that** for adhesion promotion an adhesion promoter is applied to the surface of the lightweight metal base body before the heat-insulating friction layer.

10. Method according to one of Claims 7 to 9, **characterized in that** the thermal spraying method is selected from the group comprising detonation spraying, flame spraying, high-speed flame spraying, cold-gas spraying, laser spraying, arc spraying and plasma spraying.

11. Method according to Claim 10, **characterized in that** the thermal spraying method is wire plasma spraying (PTWA).

12. Method according to Claim 10, **characterized in that** the thermal spraying method is flame spraying.

## Revendications

1. Rondelle en métal léger revêtue, comprenant une rondelle porteuse en un alliage de métal léger thermiquement résistant et une couche de friction thermiquement isolante, formée par pulvérisation thermique à partir d'un alliage métallique possédant des nanocristaux,
**caractérisée en ce que**
la couche de friction (30) appliquée par pulvérisation thermique avec une très forte atomisation des gouttelettes en fusion possède plusieurs couches minces dans une épaisseur respectivement de 10 à 30 micromètres avec une épaisseur totale pouvant atteindre 600 micromètres et
une adhérence entre la rondelle porteuse (10) et la couche de friction (30).

2. Rondelle selon la revendication 1, **caractérisée en ce que** l'alliage de métal léger est choisi dans le groupe composé d'alliages d'aluminium, d'alliages de magnésium, d'alliages de titane.

3. Rondelle selon la revendication 1 ou 2, **caractérisée en ce que** l'alliage métallique de la couche de friction (30) thermiquement isolante est choisi dans le groupe composé d'alliages de fer, d'alliages d'aluminium.

4. Rondelle selon l'une des revendications précédentes, **caractérisée en ce que** la couche de friction (30) thermiquement isolante est un alliage d'acier.

5. Rondelle selon l'une des revendications précédentes, **caractérisée en ce que** la rondelle porteuse (10) est fabriquée à partir d'un profilé extrudé en alliage d'aluminium.

6. Rondelle selon l'une des revendications précédentes, **caractérisée en ce que** l'adhérence entre la couche de friction (30) thermiquement isolante et la rondelle porteuse (10) est choisie dans le groupe d'assemblage par complémentarité de formes entre la couche de friction (30) et la rondelle porteuse (10), au moins une couche de promoteur d'adhérence constituée d'une base d'adhérence en nickel/aluminium, le grainage mécanique ou chimique de la rondelle porteuse (10).

7. Procédé de fabrication d'une rondelle en métal léger revêtue mécaniquement résistante, comprenant :
- fourniture d'un corps de base en métal léger thermiquement résistant et
- pulvérisation thermique d'un alliage métallique mécaniquement résistant en formant des nanoparticules dans la couche pulvérisée,
**caractérisé par**
- production d'une adhérence entre le revêtement à appliquer et le corps de base en métal léger
- formation de très petites gouttelettes sur la surface du corps de base en métal léger par atomisation et accélération des gouttelettes en fusion à plusieurs fois la vitesse du son à la sortie de la buse et/ou une haute température de la matière fondue et
- application de plusieurs couches minces
- dans une épaisseur respectivement de 10 à 30 micromètres et
- avec une épaisseur totale pouvant atteindre 600 micromètres.

8. Procédé selon la revendication 7, **caractérisé en ce qu'**en vue de l'adhérence, la surface du corps de base en métal léger est préparée par usinage chimique et/ou mécanique avant la pulvérisation mécanique.

9. Procédé selon la revendication 7 ou 8, **caractérisé en ce qu'**en vue de l'adhérence, un promoteur d'adhérence est appliqué sur la surface du corps de base en métal léger avant la couche de friction thermiquement isolante.

10. Procédé selon l'une des revendications 7 à 9, **caractérisé en ce que** le procédé de pulvérisation thermique est choisi dans le groupe composé de la pulvérisation par détonation, la pulvérisation à la flamme, la pulvérisation à la flamme à grande vitesse, la pulvérisation au gaz froid, la pulvérisation au laser, la pulvérisation à l'arc électrique, la pulvérisation au plasma.

11. Procédé selon la revendication 10, **caractérisé en ce que** le procédé de pulvérisation thermique est la projection thermique par arc de fil transféré au plasma (PTWA).

12. Procédé selon la revendication 10, **caractérisé en ce que** le procédé de pulvérisation thermique est la pulvérisation à la flamme.
